# EUROPEAN PATENT SPECIFICATION

(11) **EP 2 527 080 B1**
(45) Date of publication and mention of the grant of the patent: **25.05.2016**
(21) Application number: 12169430.1
(22) Date of filing: 25.05.2012
(51) Int. Cl.: B23Q 1/00, B23Q 1/01, B23Q 1/66, B23Q 11/00, B23Q 39/02

(54) **Machining center comprising a support and movement system**
Bearbeitungszentrum mit Stütz- und Bewegungssystem
Centre d'usinage comprenant un système de support et de déplacement

(30) Priority: 27.05.2011 IT FI20110111
(43) Date of publication of application: 28.11.2012
(73) Proprietor: Paolino Bacci S.r.l., 56021 Cascina, (PI) (IT)
(72) Inventor: Ruggieri, Alberto, 56025 Pontedera (PI) (IT)
(74) Representative: Mannucci, Michele

(56) References cited:
- EP-A2- 2 070 644
- WO-A1-01/89759
- WO-A1-2010/130691
- WO-A2-2008/096389
- DE-U1-202004 001 364
- US-A- 5 429 461

## Description

### TECHNICAL FIELD

The present invention relates to machining centers or machine tools for chip removal machining, in particular, but not exclusively, for machining furniture workpieces or furniture components, such as chairs or the like, made of wood or other materials.

### State of the art

EP-A-1132171 describes a machining center for machining, by means of a machining tool head, workpieces mounted on workpiece-supporting tables which translate on a base. The machining of workpieces made of various materials, in particular wood, intended for the manufacturing of furniture, such as chairs or the like, produces a large quantity of chips and scraps that must be systematically removed from the area underneath the workpiece-supporting tables in order to prevent damage of moving parts, and in particular of the racks, threaded bars and slides of the translation guides of the workpiece-supporting tables.

A machining centre according to the preamble of claim 1 is disclosed in US 5,429,461.

### Summary of the invention

Object of an embodiment of the invention is to provide a support and movement system of workpiece-supporting tables, which facilitates chip removal, both using manual systems and using automatic systems.

Object of a further embodiment of the invention is to provide a support and movement system of workpiece-supporting tables, which ensures high precisions and narrow machining tolerances with low production costs and which is simple to install and set-up.

Substantially, the invention relates to a machining centre or machine tool, according to claim 1.

As will be apparent from the description below, the configuration as claimed makes it possible to obtain a large space or volume for chip collection underneath the sliding surface of the workpiece-supporting table or tables.

In advantageous embodiments the support and movement system comprises a plurality of feet for connecting and spacing the frame from a supporting and locking surface, arranged so as to leave the area underneath said frame accessible for the removal of machining chips.

In other embodiments, spacing between the frame and the floor or other supporting surface can be obtained by arranging the crosspieces for connecting the guide-holder beams underneath the same beams. In this case, although spacer feet can be provided underneath the crosspieces, these are not indispensable, as the height, i.e. the dimension in vertical direction, of the crosspieces joining the guide-holder beams is already sufficient to space the surface of the sliding guides of the workpiece-supporting table or tables with respect to the supporting surface.

Advantageously, the self-bearing frame is monolithic. Monolithic is intended as a frame assembled directly at the time of production and which can therefore be transported and installed on site as a single component. For example, the guide-holder beams and the joining crosspieces of the guide-holder beams can be welded to one another. Likewise, the supporting feet, when present, can be welded.

In some embodiments, adjustable supports are provided to adapt the self-bearing frame to the supporting surface, for example a workshop floor. The adjustable supports offset any defects in planarity and lack of horizontality of the floor or other supporting surface.

The number of workpiece-supporting tables can vary according to the type of machine tool or machining center, wherein the support and movement system is inserted. Typically, there are provided one or two workpiece-supporting tables. In any case, to obtain improved removal of chips or other machining residues, the support and movement system comprises a pair of guide-holder beams for each workpiece-supporting table and also, in the case of several tables side by side, the adjacent guide-holder beams are in any case spaced from one another, to enable unloading of the chips in the area between one workpiece-supporting table and the other underneath the surface on which the guides are located.

In some embodiments, the support and movement system comprises movement means for each workpiece-supporting table. The movement means can be a rack and pinion, a screw and screw nut or of any other type. They preferably enable a movement according to a numerically controlled axis of the related workpiece-supporting table along the guides fixed on the respective guide-holder beams. In some embodiments the movement means are arranged so as to occupy the intermediate volume or space between the two guide-holder beams which carry the guides of the respective workpiece-supporting table. In other terms, the movement means are arranged at a height comprised between the maximum height and the minimum height of the guide-holder beams or in any case preferably above the minimum height of these guide-holder beams, so as to adequately space the movement means from the supporting surface below, for example the workshop floor, on which the self-bearing frame is arranged, in order to maximize the space available underneath the movement means, for accumulation of the chips without interference with the movement means.

At least one of the crosspieces for connecting the guide-holder beams supports auxiliary sliding guides of an auxiliary device for said workpiece-supporting table or tables. For example, guides can be provided for automatic loaders, workpiece-holder magazines, sliding safety doors, reference stops of the workpieces to be machined, etc.

In advantageous embodiments, the auxiliary guides extend orthogonally to the guides of said workpiece-supporting table or tables carried by said guide-holder beams, beyond the maximum distance between the outermost guide-holder beams of the frame. The crosspiece that carries the auxiliary guides in this case projects laterally with respect to said guide-holder beams, for example to enable the half-loaders of an automatic loading magazine to be positioned at a reciprocal distance.

In some embodiments the guide-holder beams are fixed at the ends to the crosspieces that join them. In other embodiments, the crosspieces are placed underneath the guide-holder beams. In the first case, advantageously the means for movement of the workpiece-supporting table or tables can be supported directly by the crosspieces and fixed thereto in an intermediate position of their thickness.

In other embodiments, if the guide-holder beams are fixed above the crosspieces, the means for movement of the workpiece-holder table can be carried by the crosspieces and above thereto.

The support and movement system can also comprise automatic chip removing means, for example conveyor or transport belts placed underneath the guide-holder beams. The conveyors can be placed so as to move orthogonally to the development of the guides fixed on the guide-holder beams, although it would also be possible to arrange them with movement parallel to the direction of the guides. In the first case the chips are removed at the sides of the support and movement system of tables, so as not to interfere with other structures or parts of the machining center.

The workpiece-supporting table can be moved with a numerically controlled continuous motion along the guides carried by the support and movement system, although it would also be possible for this movement not to be numerically controlled, but a simple movement of insertion of the table into the machining area of the machining head of the machining center and of removal therefrom.

Further advantageous features and embodiments of the support and movement system and of the machining center according to the invention are indicated in the accompanying claims, which form an integral part of the present description.

### Brief description of the drawings

The invention will be better understood by following the description and accompanying drawings, which show non-limiting practical embodiments of the invention. More in particular, in the drawing:
Fig.1 shows a side view of a movable upright machining center, with a support and movement system of workpiece-supporting tables according to the invention;
Fig.2 shows a front view and partial section according to II-II of Fig.1;
Fig.3 shows a side view and partial section according to III-III of Fig.4 of a portal machining center, with a support and movement system of workpiece-supporting tables according to the invention;
Fig. 4 shows a front view and partial section according to IV-IV of fig. 3;
Fig. 5 shows a plan views according to V-V of Fig. 1 of the support and movement system of workpiece-supporting tables;
Fig. 6 shows a cross section according to VI-VI of Fig. 1;
Fig.7 shows a section similar to the view of Fig.6 in a modified embodiment;
Fig.8 shows a plan view according to VIII-VIII of the support and movement system of Fig.7;
Fig.9 shows a section similar to that of Fig. 6, in a modified embodiment of the support and movement system according to the invention;
Fig.10 shows an axonometric view of a support and movement system of workpiece-supporting tables from which the tables have been removed for greater clarity of the drawing, in a modified embodiment;
Fig.11 shows an axonometric view, with parts removed, of the support and movement system of Figs. 1 to 9;
Fig.12 shows the embodiment of the support and movement system of Fig.11 with application of half-loaders of the workpieces to be machined applied to the support and movement system of workpiece-supporting tables;
Fig.13 shows an axonometric view of the system of Fig.12 with the workpiece-supporting tables mounted; and
Fig.14 shows a side view of a movable upright machining center with a support and movement system of workpiece-supporting tables with pressers for locking the workpieces on the workpiece-supporting tables and loading magazines applied to the support and movement system, according to the configuration of Fig.13.

### Detailed description of embodiments of the invention

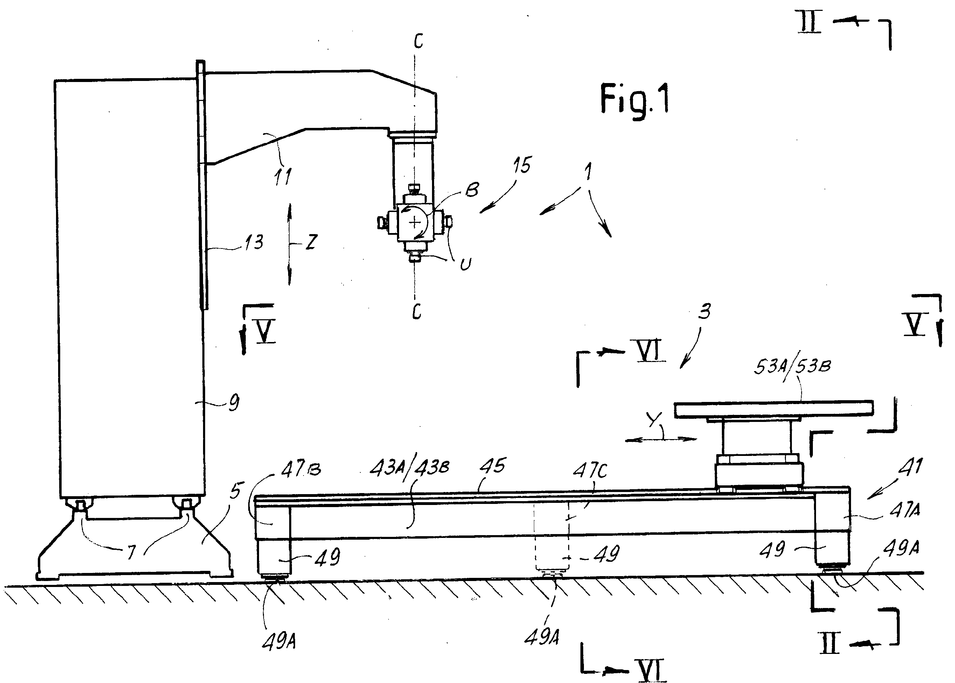

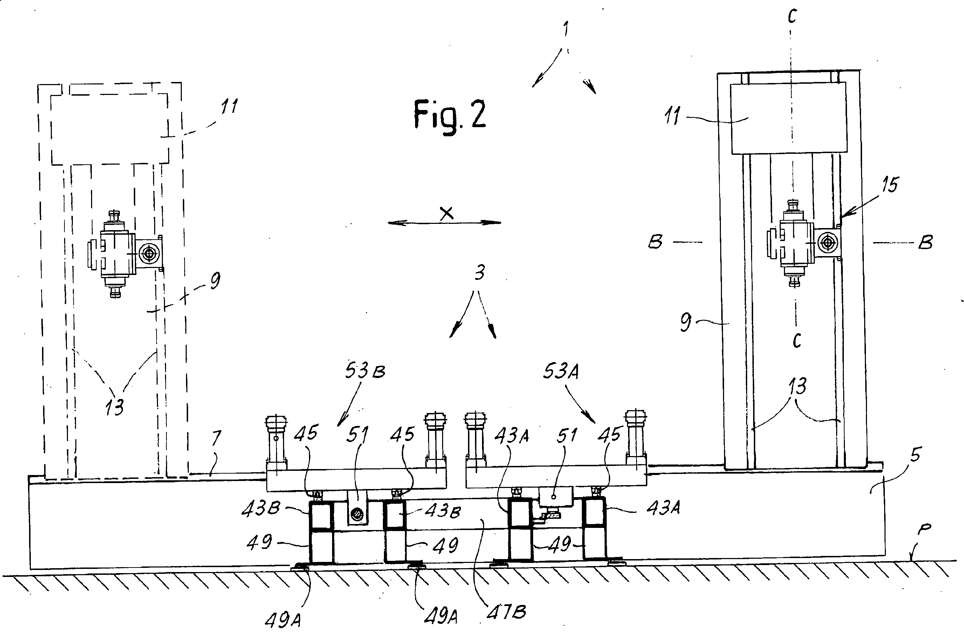

Fig.1 shows a machining center, indicated as a whole with 1, which comprises a support and movement system of workpiece-supporting tables, indicated as a whole with 3. In this case the machining center 1 is a movable upright machining center with a base 5 provided with guides 7 on which an upright 9 translates according to a numerically controlled translation axis, which upright carries a slide 11 slidable according to a numerically controlled axis Z along guides 13 carried by the upright 9. The slide 11 carries a machining tool head 15, provided with a numerically controlled rotation movement according to two numerically controlled rotation axes respectively indicated with B and C. The tools of the head 15 are indicated with U. Fig.2 illustrates a front view according to II-II of Fig.1, showing the movement according to the axis X of the movable upright 9 along the base 5. Two end positions that can be taken by the upright 9 during machining are indicated in dashed line and continuous line, respectively.

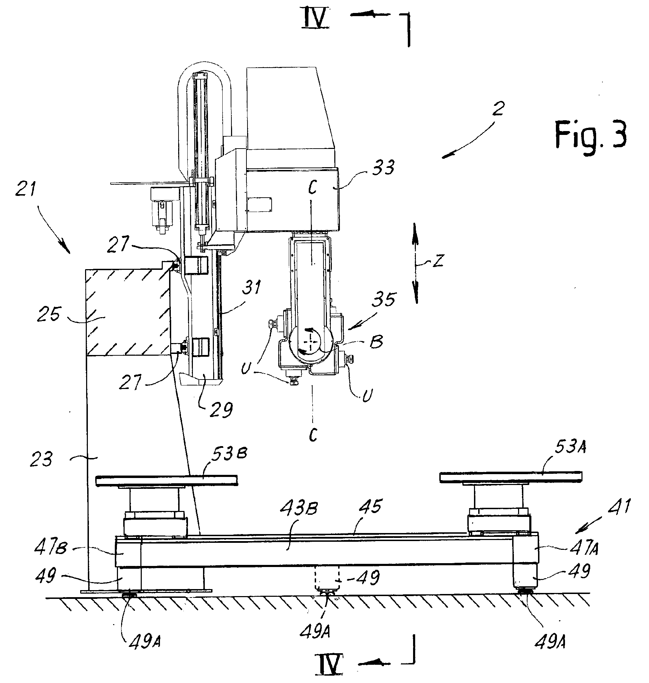

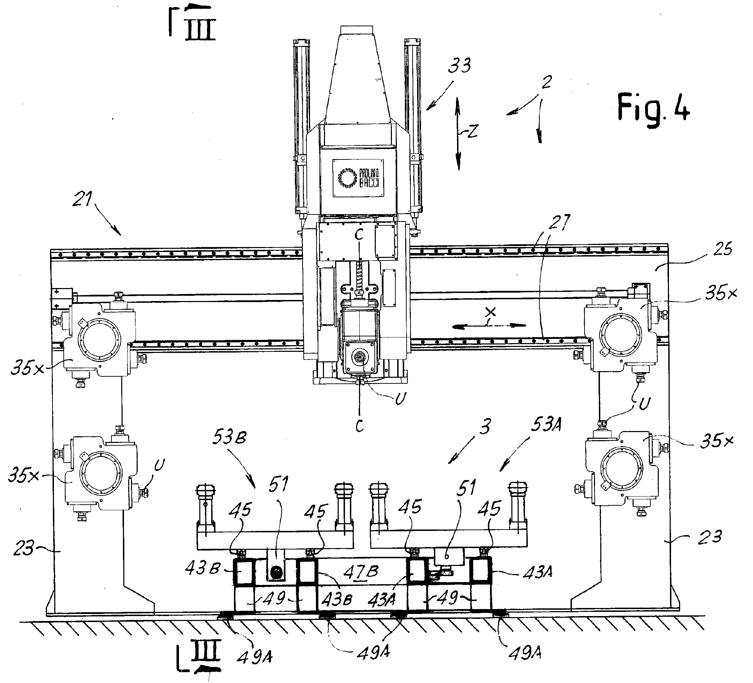

Figs.3 and 4 show a view and partial section and a front view of a machining center 2 in a different embodiment. The machining center 2 is of the portal type. Once again it comprises a support and movement system of workpiece-supporting tables indicated with 3, substantially the same as that of Figs.1 and 2 and the structure of which will be described in greater detail below. The machining center 2 comprises, combined with the supporting and movement system 3 of workpiece-supporting tables, a portal structure indicated as a whole with 21. The structure 21 comprises two uprights 23 and one crosspiece 25, on which there are provided guides 27 for the sliding movement of a slide 29 according to a numerically controlled axis X. The slide 29 carries guides 31 (see in particular Fig.3) for a further slide 33 movable according to a numerically controlled vertical axis Z. The slide 33 carries a machining tool head 35, the tools of which are indicated with U. The machining tool head 35 rotates about two numerically controlled rotation axes, respectively indicated with B and C. In Fig.4 four end positions that can be taken by the tool head 35 in its movements along the numerically controlled axes X and Z are indicated with 35X. In the positions 35X the machining head is shown rotated through 90° about the numerically controlled rotation axis C with respect to the position taken by the head shown on the slide 33 in the two Figs.3 and 4.

The structure of the machining centers 1 and 2 described above is an example of possible embodiments or structures of machining centers in which the present invention can be produced.

The support and movement system of workpiece-supporting tables, indicated as a whole with 3, will be described with reference to Figs. 1 to 6 and 11.

The support and movement system 3 comprises a self-bearing monolithic frame 41. In this embodiment the frame 41 comprises two pairs of guide-holder beams indicated with 43A and 43B. Each guide-holder beam 43A, 43B carries a guide 45 for a respective workpiece-supporting table. The workpiece-supporting tables are respectively indicated with 53A and 53B. The number of pairs of guide-holder beams 43A, 43B corresponds to the number of workpiece-supporting tables of the support and movement system, so that each workpiece-supporting table is provided with two guides carried by guide-holder beams physically and spatially separated from the guide-holder beams of the remaining workpiece-supporting tables. The workpiece-supporting tables 53A, 53B can advantageously be provided with a numerically controlled movement along a numerically controlled translation axis Y parallel to the guides 45.

The guide-holder beams 43A, 43B are joined by at least a first crosspiece 47A and a second crosspiece 47B arranged preferably at the ends of the guide-holder beams 43A, 43B. In the example illustrated the beams 43A, 43B are fixed at the ends to the crosspieces 47A, 47B, so as to form a structure constituted by beam-shaped elements lying on a single plane.

The beams 43A, 43B and the crosspieces 47A, 47B can be made of a same semi-finished product, for example having a box-shaped structure, i.e. a quadrangular section, typically with a larger vertical dimension and a smaller horizontal dimension, to obtain maximum resistance to the vertical loads applied to the monolithic frame 41.

The beams 43A, 43B and 47A, 47B are advantageously irreversibly joined to one another, for example and preferably by welding, so that they are assembled by the manufacturer. In this way, the frame 41 can be transported and installed on site with very rapid and simple operations, which reduce the overall cost of the machining center in which the support and movement system 3 is installed.

In some embodiments there can also be provided a third crosspiece 47C placed approximately in an intermediate position along the longitudinal development of the guide-holder beams 43A, 43B. In some figures the crosspiece 47C is shown with a dashed line and in others it is omitted. This crosspiece 47C is provided when the length of the guide-holder beams 43A, 43B, with respect to their cross section, makes the use of an intermediate beam as crossbar recommendable or mandatory.

In some embodiments the crosspieces 47A, 47B and optionally 47C are equipped with short uprights 49, hereinafter called feet 49, arranged between the crosspieces 47A, 47B (and optionally 47C) and the floor P on which the support and movement system 3 is fixed. Each foot 49 can be equipped with an adjustable support 49A interposed between the foot and the floor P.

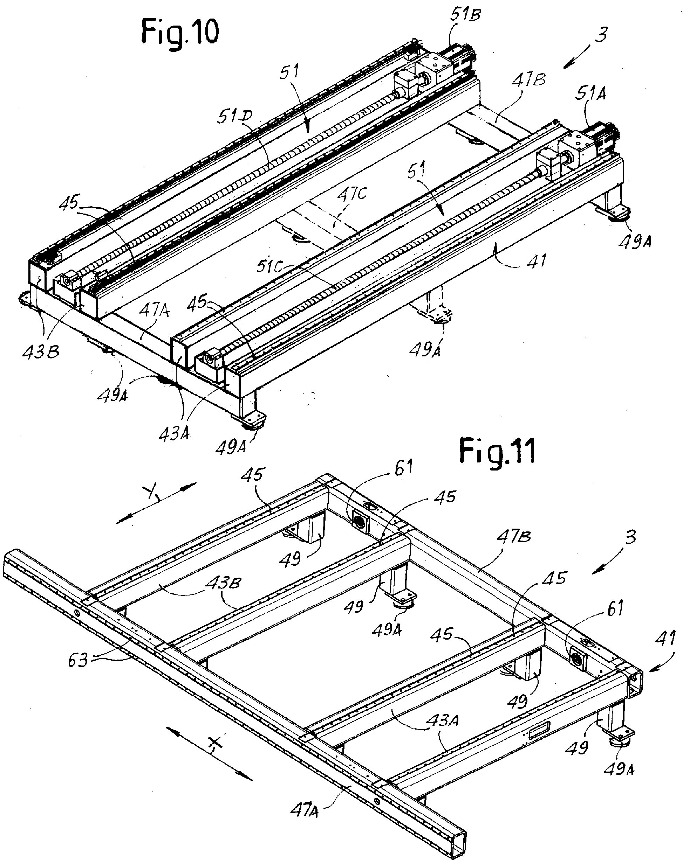

Along each pair of guide-holder beams 47A, 47B there are arranged movement means 51 of the workpiece-supporting tables 53A, 53B. The movement means 51 can be of various types. In Fig.11 the movement means 51 have been removed for the sake of simplicity of representation. In each of Figs.2, 4, 6, 7, 9 two alternative embodiments of the means 51 are shown, and more precisely a rack and pinion movement mechanism, with the rack fixed to one of the beams 43A, is represented for the pair of guide-holder beams 43A, while a threaded bar or screw mechanism, extending between the guide-holder beams 43B, and with which a nut screw carried by the respective workpiece-supporting table 53B engages, is indicated for the guide-holder beams 43B.

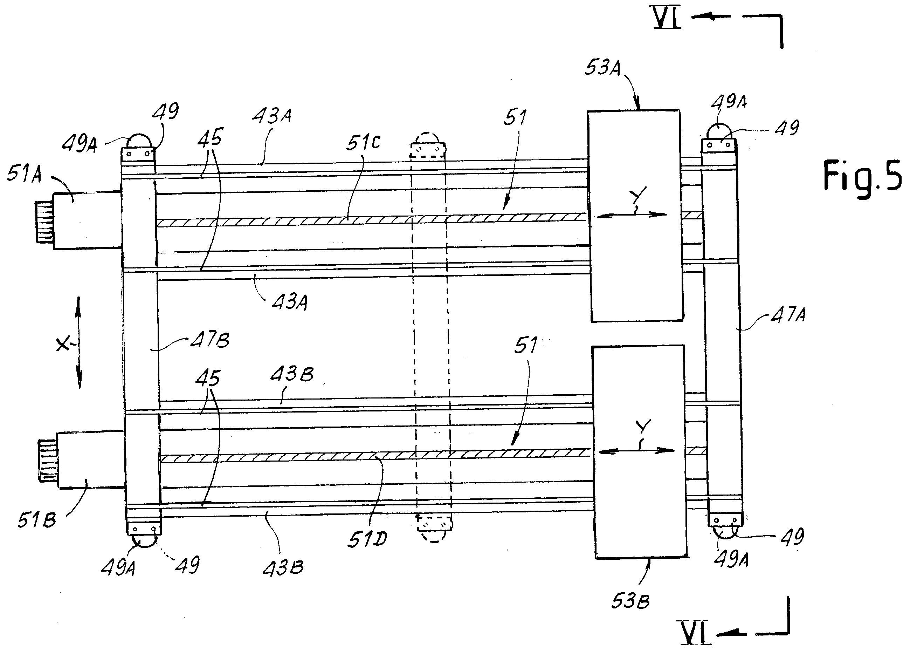

In the plan view of Fig.5 a threaded bar movement means is shown for both the workpiece-supporting tables 53A, 53B, for simplicity of representation. The threaded bar, indicated with 51C and 51 D in Fig.5, and the respective motors are carried by the frame 41.

The movement means 51 of the workpiece-supporting tables can be appropriately arranged between two guide-holder beams 43A, 43A or 43B, 43B of the respective workpiece-supporting table 53A o 53B, as shown in the accompanying drawings. However, it would also be possible for the movement means, for example the threaded bar or the rack, to be placed externally to the respective pair of guide-holder beams. In both cases, it is advantageous that the height at which the movement means 51 are located is such that they are contained between the lower surface and the upper surface of the guide-holder beams, i.e. that they do not project underneath these beams, in order to maximize the volume available underneath the movement means 51 for collecting chips or other machining scraps or swarf.

With a support and movement system according to the invention the workpiece-supporting tables 53A, 53B are located at a relatively high height with respect to the floor P. The distance between the movement means 51 and the floor P is indicated with H (see, for example, Fig. 2). This distance represents the height of the volume in which the chips deriving from machining can be collected without interfering with the movement means 51 and with the guides 45. The greater the height H, the greater the quantity of chips or machining scraps that can accumulate before a removal operation.

The particular structure of the support and movement system 3 enables easy access to the volume underneath the movement means 51 and the guides 45, in which the chips accumulate to facilitate removal thereof. This is particularly useful in machining centers, such as those illustrated in the accompanying figures, wherein the height at which the workpiece to be machined is loaded is approximately 80-90 cm from the floor and wherein the guides of the workpiece-supporting tables are located substantially underneath this height due to the presence of the structures above the tables, such as uprights and linear elements for supporting and/or locking the workpieces to be machined.

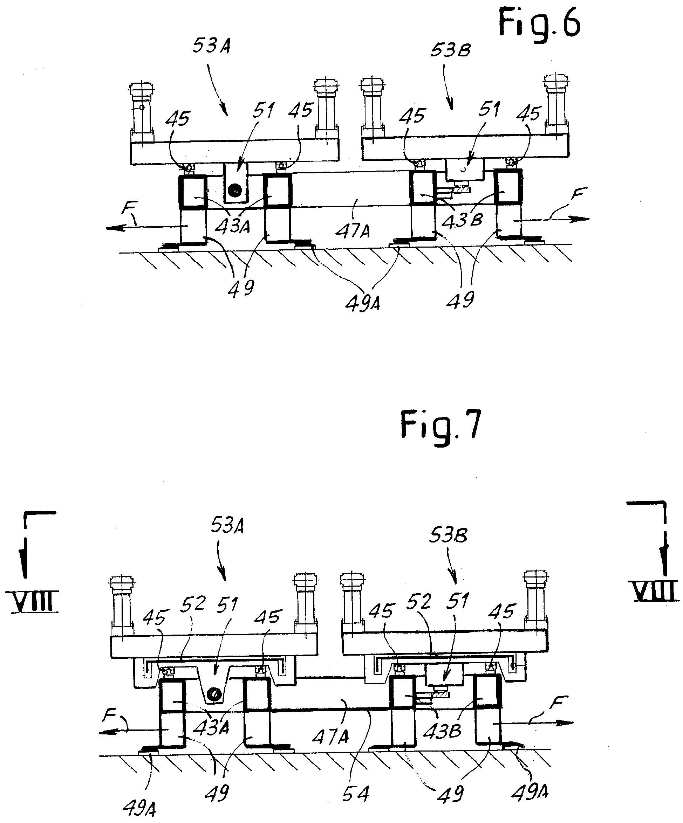

In Fig.6 the arrows F indicate the direction in which the chips collected underneath the machining area can be removed. Removal can take place manually using suction systems that the operator can easily insert underneath the guide-holder beams 43A, 43B.

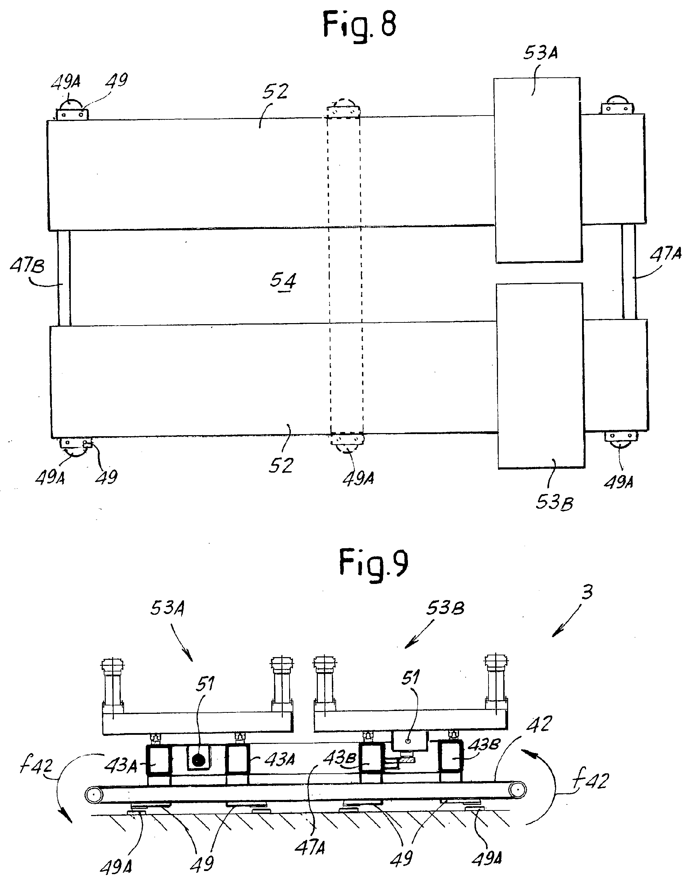

Fig.9 shows the same support and movement system 3 with the workpiece-supporting tables 53A, 53B and the movement means 51A, 51B associated to an automatic chip removal system indicated with 42. In the embodiment illustrated, the automatic chip removal system 42 comprises one or more conveyor belts movable according to the arrows f42 in Fig.9. The upper branch of the conveyor belt or belts 42 collects the chips that drop from the area above containing the machining volume in which the machining head of the machining center moves. Through the movement of the conveyor belt or belts 42 the chips are carried outside the support and movement system 3 to be removed. The configuration of the support and movement system 3 is such as to leave ample space underneath the guides 45, both for the conveyor belt or belts 42, and for the volume of chips which can accumulate on said conveyor belts. The number of the conveyor belts 42 can vary according to the dimension in the direction of the two guides 45 of the guide-holder beams 43A, 43B and to the presence of any intermediate crosspieces 47C.

Fig.10 shows a modified embodiment of the support and movement system 3 of the workpiece-supporting tables 53A, 53B, limited to the self-bearing frame 3 and to the movement means 51 of the workpiece-supporting tables, from which the workpiece-supporting tables have been removed for better representation of the self-bearing frame 41. In this case there are again provided two pairs of guide-holder beams 43A, 43B on which there are fixed guides 45 of the workpiece-supporting tables 53A, 53B. While in Fig.11 the guide-holder beams 43A, 43B and the crosspieces 47A, 47B are positioned at the same height and the feet 49 are positioned underneath them, in the case of Fig.10 the guide-holder beams 43A, 43B are fixed above the crosspieces 47A, 47B and the optional intermediate crosspiece 47C. In this case, the crosspieces 47A, 47B and 47C also perform the function of spacers from the floor P, without the need of using feet 49. However, the volume underneath the guides 45 is less easy to access, at least in the direction parallel to the direction of the guides.

The adjustable supports are again indicated with 49A, and in this case they are constrained directly to the crosspieces 47A, 47B, 47C.

In some embodiments the support and movement system 3 can also be provided with horizontal protective casings, as shown schematically in Figs.7 and 8. In these figures there are provided two protective casings 52, at a greater height to protect the guides 45 and the movement means 51, and a lower casing 54. The protective casings 52 and 54 can also be provided in a support and movement system of the type illustrated in Fig.10.

In some embodiments, as shown in Fig.11 the crosspiece 47A is equipped in turn with auxiliary guides 63, not present in Figs. 1 to 9. In the example of Fig.11, the crosspiece 47A has in the X direction a greater length than the length of the crosspiece 47B, while in Figs. 1 to 9 the length of the two crosspieces 47A. 47B is the same.

The auxiliary guides 63 can be used for mounting various elements, components or accessories of the machining center, to which the support and movement system 3 of the workpiece-supporting tables 53A, 53B is associated. For example, on the auxiliary guides 63 there can be mounted walls or sliding safety doors, adjustable reference stops for the workpieces, automatic magazines or loaders of the workpieces to be machined.

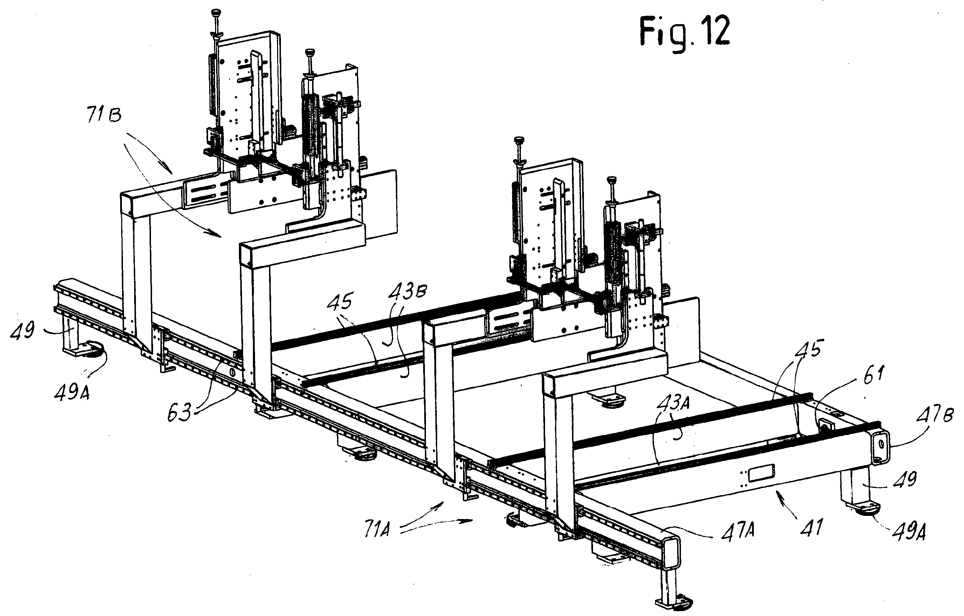

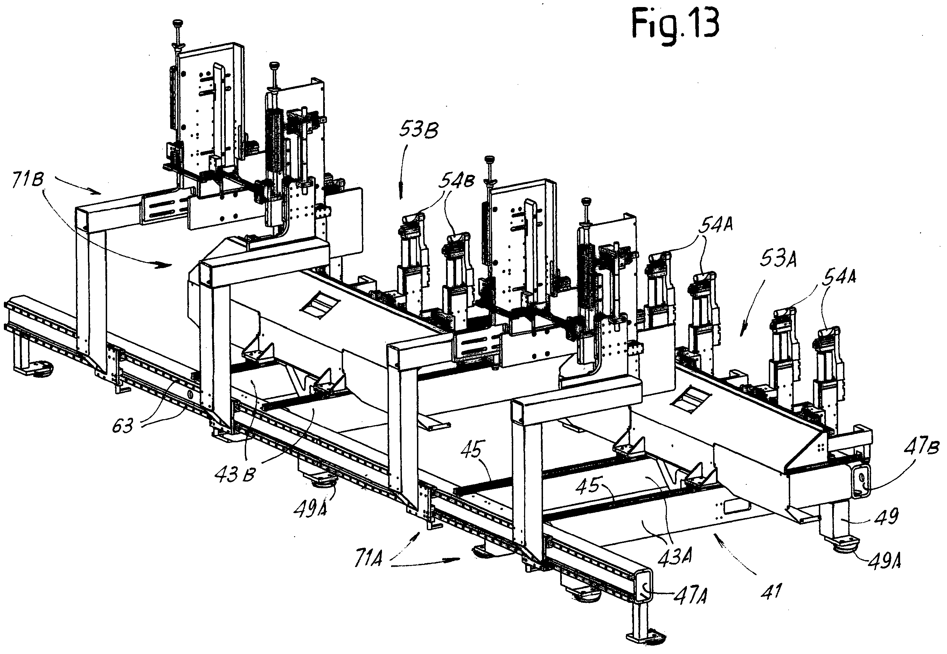

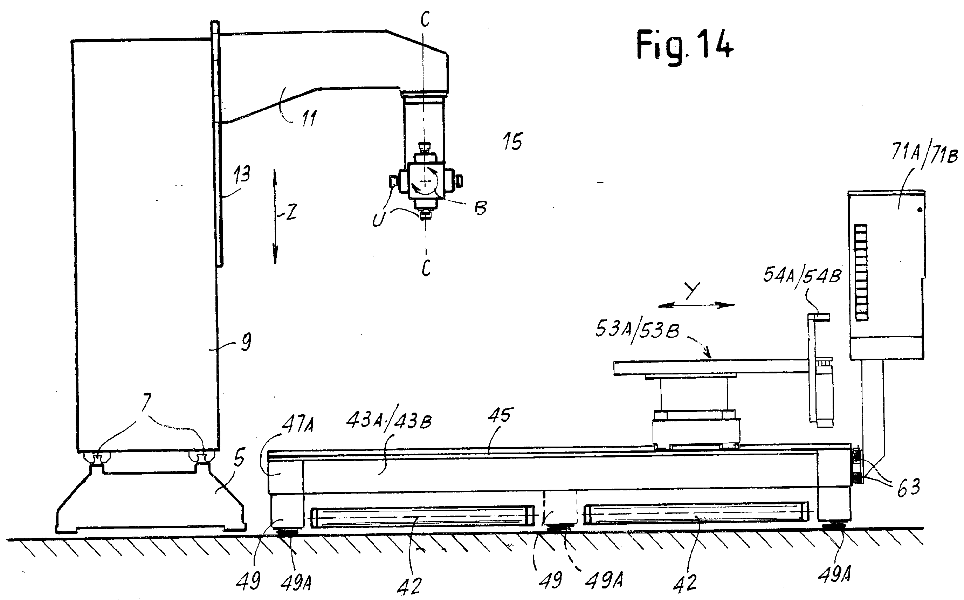

Figs. 12 to 14 show a configuration of the support and movement system 3 wherein magazines with automatic half-loaders for the workpieces to be machined are associated to the self-bearing frame 41, said magazines being slidable along the guides 63 integral to the crosspiece 47A (Fig.11).

In the example illustrated, to each workpiece-supporting table 53A, 53B an automatic loader-magazine is associated, indicated with 71A for the workpiece-supporting table 53A and with 71B for the workpiece-supporting table 53B. Each loader-magazine is divided into two half-loaders adjustable along the auxiliary guides 63 to adjust the distance between the two half-loaders to the dimension of the workpieces to be loaded, all in a manner known to those skilled in the art. In the example illustrated adjustable pressers 54A, 54B are associated to the workpiece-supporting tables 53A, 53B, to lock the workpieces to be machined to the respective workpiece-supporting tables.

It is understood that the drawing shows just one example, provided merely as a practical demonstration of the invention, which can vary in its forms and arrangements, without however departing from the scope of the claims. Any reference numbers in the appended claims are provided to facilitate reading of the claims with reference to the description and to the drawing, and do not limit the scope of protection represented by the claims.

## Claims

1. A machining centre (1) comprising:
- a bearing structure (5, 9; 21) whereon at least one machining tool head (15) is movably mounted according to a plurality of numerically controlled axes (B, C, Z, X);
- and a support and movement system (3) of workpiece-supporting tables (53A, 53B), comprising:
➢ a self-beating frame (41) with at least a first pair of guide-holder beams (43A, 43B) provided with guides (45) for at least a first workpiece-supporting table (53A, 53B) movable along said guides (45) carried by said first pair of guide-holder beams (43A, 43B);
➢ a first crosspiece (47A) and a second crosspiece (47B) for connecting said guide-holder beams (43A, 43B);
**characterized by** further comprising auxiliary sliding guides (63) for an auxiliary device (71A, 7B) for said workpiece-supporting table or tables (53A, 53B), said auxiliary guides (63) being supported by one of said first crosspiece (47A) and second crosspiece (47B) and being associated to one end of said support and movement system (3), which is substantially opposite to the bearing structure (5, 9; 21) of the machining head.

2. Machining centre (1) according to claim 1, wherein said guide-holder beams (43A, 43B) are spaced from a supporting and locking surface (P) of the self-bearing frame, and preferably comprising a plurality of feet (49) for spacing and connecting the self-bearing frame (41) to said supporting and locking surface.

3. Machining centre (1) according to claim 1 or 2, comprising adjustable supports (49A).

4. Machining centre (1) according to claim 1, 2 or 3, wherein said self-bearing frame (41) is monolithic.

5. Machining centre (1) according to one or more of the previous claims, comprising first means (51) for moving said workpiece-supporting table (53A, 53B) along the guides (45) carried by said first pair of guide-holder beams (43A, 43B).

6. Machining centre (1) according to one or more of the previous claims, wherein said support and spacing feet (49) are arranged underneath said first crosspiece (47A) and said second crosspiece (47B), for keeping said first crosspiece and said second crosspiece spaced from the supporting and locking surface (P).

7. Machining centre (1) according to one or more of the previous claims, wherein said spacing feet (49), said crosspieces and said guide-holder beams (43A, 43B) are irreversibly constrained, forming said self-bearing frame (41).

8. Machining centre (1) according to one or more of the previous claims, comprising a second pair of guide-holder beams (43B) with guides (45) for a second workpiece-supporting table (53A, 53B) movable along said guides (45) carried by said second pair of guide-holder beams(43B); said second pair of guide-holder beams being connected to one another and to said first pair of guide-holder beams (43A) by said first crosspiece (47A) and by said second crosspiece (47B); between the first pair of guide-holder beams (43A) and the second pair of guide-holder beams (43B) there being provided a space for chip dropping.

9. Machining centre (1) according to claim 8, comprising second means (51) for moving said second workpiece-supporting table (53B) along the guides (45) carried by said second pair of guide-holder beams (43B).

10. Machining centre (1) according to one or more of the preceding claims, wherein said auxiliary guides (63)extend orthogonally to the guides (45) of said workpiece-supporting table or tables (53A, 53B) carried by said guide-holder beams (43A, 43B).

11. Machining centre (1) according to one or more of the preceding claims, wherein said auxiliary device (71A, 71B) is selected from the group comprising: a magazine for automatic loading workpieces to be machined; adjustable reference stops; safety doors; or combinations thereof.

12. Machining centre (1) according to one or more of the preceding claims, wherein the crosspiece or crosspieces (47A, 47B) carrying said auxiliary guides (63) have a length that is greater than the maximum distance between the outermost guide-holder beams (43A, 43B), protruding laterally with respect to said guide-holder beams (43A, 43B).

13. Machining centre (1) according to one or more of the preceding claims, wherein: the first crosspiece (47A) carries said auxiliary guides (63); the second crosspiece (47B) is free from auxiliary guides; and the first crosspiece (47A) is longer than the second crosspiece (47B).

14. Machining centre (1) according to one or more of the previous claims, wherein said means (51) for moving said workpiece-supporting table or tables (53A, 53B) are arranged at a height comprised within the vertical extension of said guide-holder beams (43A, 43B).

15. Machining centre (1) according to one or more of the previous claims, wherein said guide-holder beams (43A, 43B) are frontally fixed, at the ends thereof, to said first crosspiece (47A) and to said second crosspiece (47B), and wherein preferably said means (51) for moving said workpiece-supporting table or tables (53A, 53B) are supported by said first crosspiece (47A) and by said second crosspiece (47B) and fixed thereto in an intermediate position of the thickness of said crosspieces (47A 47B).

16. Machining centre (1) according to one or more of claims 1 to 14, wherein said guide-holder beams (43A, 43B) are fixed above said first crosspiece (47A) and said second crosspiece (47B), and wherein preferably said means (51) for moving said workpiece-supporting table or tables are carried by said first crosspiece (47A) and said second crosspiece (47B) and above thereto.

17. Machining centre according to one or more of the previous claims, comprising chip removal means.

18. Machining centre (1) according to any one of the preceding claims, wherein said bearing structure (21) is a, preferably monolithic, gantry structure.

19. Machining centre (1) according to any one of claims 1 to 17, wherein said bearing structure is a movable upright structure (5, 9), with a base (5) whereon at least one upright (9) carrying said head (15) is movable along a numerically controlled translation axis (X).

20. Machining centre (1) according to one or more of the preceding claims, wherein between said support and movement system (3) and said bearing structure (5, 9; 21) there is no direct mechanical connection.

## Patentansprüche

1. Bearbeitungszentrum (1) das Folgendes umfasst:
- eine Tragstruktur (5, 9; 21), auf der mindestens ein Bearbeitungskopf (15) beweglich gemäß einer Anzahl numerisch gesteuerter Achsen (B, C, Z, FX) angebracht ist;
- und ein Träger- und Bewegungssystem (3) von werkstücktragenden Tischen (53A, 53B), das umfasst:
einen selbsttragenden Rahmen (41) mit mindestens einem ersten Paar Führungshalterträger (43A, 43B), die mit Führungen (45) für mindestens einen ersten werkstücktragenden Tisch (53A, 53B) versehen sind, der entlang der Führungen (45), die durch das erste Paar Führungshalterträger (43A, 43B) getragen werden, beweglich ist;
ein erstes Kreuzstück (47A) und ein zweites Kreuzstück (47B) zum Verbinden der Führungshalterträger (43A, 43B);
**gekennzeichnet durch** weiteres Umfassen von Hilfsgleitführungen (63) für eine Hilfsvorrichtung (71A, 7B) für den werkstücktragenden Tisch oder Tische (53A, 53B), wobei die Hilfsführungen (63) **durch** eines von dem ersten Kreuzstück (47A) und dem zweiten Kreuzstück (47B) getragen werden und mit einem Ende des Träger- und Bewegungssystems (3) verknüpft sind, das im Wesentlichen entgegengesetzt zu der Tragstruktur (5, 9; 21) des Bearbeitungskopfs ist.

2. Bearbeitungszentrum (1) gemäß Anspruch 1, wobei die Führungshalterträger (43A, 43B) von einer Trag- und Arretierungsoberfläche (P) des selbsttragenden Rahmens beabstandet sind und bevorzugt eine Anzahl von Füßen (49) zum Beabstanden und Verbinden des selbsttragenden Rahmens (41) mit der Trag- und Arretierungsoberfläche umfasst.

3. Bearbeitungszentrum (1) gemäß Anspruch 1 oder 2, das einstellbare Träger (49A) umfasst.

4. Bearbeitungszentrum (1) gemäß Anspruch 1, 2 oder 3, wobei der selbsttragende Rahmen (41) monolithisch ist.

5. Bearbeitungszentrum (1) gemäß einem oder mehreren der vorhergehenden Ansprüche, das erste Mittel (51) zum Bewegen des werkstücktragenden Tisches (53A, 53B) entlang der Führungen (45), die durch das erste Paar Führungshalterträger (43A, 43B) getragen werden, umfasst.

6. Bearbeitungszentrum (1) gemäß einem oder mehreren der vorhergehenden Ansprüche, wobei die Trag- und Beabstandungsfüße (49) unterhalb des ersten Kreuzstücks (47A) und des zweiten Kreuzstücks (47B) angeordnet sind, um das erste Kreuzstück und das zweite Kreuzstück von der Trag- und Arretierungsoberfläche (P) beabstandet zu halten.

7. Bearbeitungszentrum (1) gemäß einem oder mehreren der vorhergehenden Ansprüche, wobei die Beabstandungsfüße (49), die Kreuzstücke und die Führungshalterträger (43A, 43B) irreversibel verbunden sind, sodass sie den selbsttragenden Rahmen (41) bilden.

8. Bearbeitungszentrum (1) gemäß einem oder mehreren der vorhergehenden Ansprüche, das ein zweites Paar Führungshalterträger (43B) mit Führungen (45) für einen zweiten werkstücktragenden Tisch (53A, 53B), der entlang der Führungen (45), die durch das zweite Paar Führungshalterträger (43B) getragen werden, beweglich ist, umfasst; wobei das zweite Paar Führungshalterträger miteinander und mit dem ersten Paar Führungshalterträger 43A) durch das erste Kreuzstück (47A) und durch das zweite Kreuzstück (47B) verbunden ist; wobei zwischen dem ersten Paar Führungshalterträger (43A) und dem zweiten Paar Führungshalterträger (43B) ein Zwischenraum zum Spanabwurf bereitgestellt ist.

9. Bearbeitungszentrum (1) gemäß Anspruch 8, das zweite Mittel (51) zum Bewegen des zweiten werkstücktragenden Tisches (53B) entlang der Führungen (45), die durch das zweite Paar Führungshalterträger (43B) getragen werden, umfasst.

10. Bearbeitungszentrum (1) gemäß einem oder mehreren der vorhergehenden Ansprüche, wobei die Hilfsführungen (63) sich rechtwinklig zu den Führungen (45) des werkstücktragenden Tisches oder der Tische (53A, 53B), die von den Führungshalterträgern (43A, 43B) getragen werden, erstrecken.

11. Bearbeitungszentrum (1) gemäß einem oder mehreren der vorhergehenden Ansprüche, wobei die Hilfsvorrichtung (71 A, 71 B) ausgewählt ist aus der Gruppe umfassend: ein Magazin für automatisches Laden von zu bearbeitenden Werkstücken; einstellbare Referenzanschläge; Sicherheitstüren; oder Kombinationen davon.

12. Bearbeitungszentrum (1) gemäß einem oder mehreren der vorhergehenden Ansprüche, wobei das Kreuzstück oder die Kreuzstück (47A, 47B), welche die Hilfsführungen (63) tragen, eine Länge aufweisen, die größer ist als die maximale Entfernung zwischen den äußersten Führungshalterträgern (43A, 43B), die lateral hinsichtlich der Führungshalterträger (43A, 43B) vorsteht.

13. Bearbeitungszentrum (1) gemäß einem oder mehreren der vorhergehenden Ansprüche, wobei: das erste Kreuzstück (47A) die Hilfsführungen (63) trägt; das zweite Kreuzstück (47B) frei von Hilfsführungen ist; und das erste Kreuzstück (47A) länger als das zweite Kreuzstück (47B) ist.

14. Bearbeitungszentrum (1) gemäß einem oder mehreren der vorhergehenden Ansprüche, wobei die Mittel (51) zum Bewegen des werkstücktragenden Tisches oder der Tische (53A, 53B) in einer Höhe angeordnet sind, die innerhalb der vertikalen Erstreckung der Führungshalterträger (43A, 43B) eingeschlossen ist.

15. Bearbeitungszentrum (1) gemäß einem oder mehreren der vorhergehenden Ansprüche, wobei die Führungshalterträger (43A, 43B) frontal, an deren Enden, an dem ersten Kreuzstück (47A) und an dem zweiten Kreuzstück (47B) befestigt sind und wobei bevorzugt die Mittel (51) zum Bewegen des werkstücktragenden Tisches oder der Tische (53A, 53B) durch das erste Kreuzstück (47A) und durch das zweite Kreuzstück (47B) getragen werden und daran in einer mittleren Position der Dicke der Kreuzstücke (47A, 47B) befestigt sind.

16. Bearbeitungszentrum (1) gemäß einem oder mehreren der Ansprüche 1 bis 14, wobei die Führungshalterträger (43A, 43B) über dem ersten Kreuzstück (47A) und dem zweiten Kreuzstück (47B) befestigt sind und wobei bevorzugt die Mittel (51) zum Bewegen des werkstücktragenden Tisches oder der Tische durch das erste Kreuzstück (47A) und das zweite Kreuzstück (47B) und darüber dazu getragen werden.

17. Bearbeitungszentrum gemäß einem oder mehreren der vorhergehenden Ansprüche, das Spanentfernungsmittel umfasst.

18. Bearbeitungszentrum (1) gemäß einem der vorhergehenden Ansprüche, wobei die Tragstruktur (21) eine, bevorzugt monolithische, Portalstruktur ist.

19. Bearbeitungszentrum (1) gemäß einem der Ansprüche 1 bis 17, wobei die Tragstruktur eine bewegliche Ständerstruktur (5, 9) ist, mit einer Basis (5), auf der mindestens ein Ständer (9), der den Kopf (15) trägt, entlang einer numerisch gesteuerten Translationsachse (X) beweglich ist.

20. Bearbeitungszentrum (1) gemäß einem oder mehreren der vorhergehenden Ansprüche, wobei zwischen dem Trag- und Bewegungssystem (3) und der Tragstruktur (5, 9; 21) keine direkte mechanische Verbindung besteht.

## Revendications

1. Un centre d'usinage (1) comprenant :
- une structure de support (5, 9 ; 21) sur laquelle au moins une tête d'outil d'usinage (15) est montée de manière déplaçable suivant une pluralité d'axes commandés numériquement (B, C, Z, X) ;
- et un système de support et de déplacement (3) de tables de support de pièce à usiner (53A, 53B), comprenant :
- un cadre auto-portant (41) avec au moins une première paire de poutres de support de guide (43A, 43B) muni de guides (45) pour au moins une première table de support de pièce à usiner (53A, 53B) déplaçable le long desdits guides (45) portés par ladite première paire de poutres de support de guide (43A, 43B) ;
- une première pièce transversale (47A) et une seconde pièce transversale (47B) pour connecter lesdites poutres de support de guide (43A, 43B) ;
**caractérisé en ce qu'**il comprend en outre des guides coulissants auxiliaires (63) pour un dispositif auxiliaire (71A, 71B) pour ladite ou lesdites tables de support de pièce à usiner (53A, 53B), lesdits guides auxiliaires (63) étant supportés par l'une desdites première pièce transversale (47A) et seconde pièce transversale (47B) et étant associés à une extrémité dudit système de support et de déplacement (3), lequel est sensiblement opposé à la structure de support (5, 9 ; 21) de la tête d'usinage.

2. Centre d'usinage (1) selon la revendication 1, dans lequel lesdites poutres de support de guide (43A, 43B) sont espacées d'une surface de support et de verrouillage (P) du cadre auto-portant, et de préférence comprennent une pluralité de pieds (49) pour espacer et connecter le cadre auto-portant (41) à ladite surface de support et de verrouillage.

3. Centre d'usinage (1) selon la revendication 1 ou 2, comprenant des supports ajustables (49A).

4. Centre d'usinage (1) selon la revendication 1, 2 ou 3, dans lequel ledit cadre auto-portant (41) est d'un seul tenant.

5. Centre d'usinage (1) selon une ou plusieurs des revendications précédentes, comprenant des premiers moyens (51) pour déplacer ladite table de support de pièce d'usinage (53A, 53B) le long des guides (45) portés par ladite première paire de poutres de support de guide (43A, 43B).

6. Centre d'usinage (1) selon une ou plusieurs des revendications précédentes, dans lequel lesdits pieds de support et d'espacement (49) sont agencés sous ladite première pièce transversale (47A) et ladite seconde pièce transversale (47B), pour maintenir ladite première pièce transversale et ladite second pièce transversale éloignées de la surface de support et de verrouillage (P).

7. Centre d'usinage (1) selon une ou plusieurs des revendications précédentes, dans lequel lesdits pieds d'espacement (49), lesdites pièces transversales et lesdites poutres de support de guide (43A, 43B) sont contraints de manière irréversible, formant ledit cadre auto-portant (41).

8. Centre d'usinage (1) selon une ou plusieurs des revendications précédentes, comprenant une seconde paire de poutres de support de guide (43B) avec des guides (45) pour une seconde table de support de pièce à usiner (53A, 53B) déplaçable le long desdits guides (45) portés par ladite seconde paire de poutres de support de guide (43B) : ladite seconde paire de poutres de support de guide étant connectés l'une à l'autre et à ladite première paire de poutres de support de guide (43A) par ladite première pièce transversale (47A) et par ladite seconde pièce transversale (47B) ; entre la première paire de poutres de support de guide (43A) et la seconde paire de poutres de support de guide (43B) étant prévu un espace pour laisser tomber les copeaux.

9. Centre d'usinage (1) selon la revendication 8, comprenant des seconds moyens (51) pour déplacer ladite seconde table de support de pièce à usiner (53B) le long de guides (45) portés par ladite seconde paire de poutres de support de guide (43B).

10. Centre d'usinage (1) selon une ou plusieurs des revendications précédentes, dans lequel lesdits guides auxiliaires (63) s'étendent orthogonalement aux guides (45) de ladite table ou desdites tables de support de pièce à usiner (53A, 53B) portées par lesdites poutres de support de guide (43A, 43B).

11. Centre d'usinage (1) selon une ou plusieurs des revendications précédentes, dans lequel ledit dispositif auxiliaire (71A, 71B) est choisi dans le groupe comprenant : un magasin pour le chargement automatique de pièces à usiner ; des butées de référence ajustables ; des portes de sécurité ; ou une combinaison de ces éléments.

12. Centre d'usinage (1) selon une ou plusieurs des revendications précédentes, dans lequel la pièce transversale ou les pièces transversales (47A, 47B) portant lesdits guides auxiliaires (63) ont une longueur qui est supérieure à la distance maximale entre les poutres de support de guide les plus éloignées (43A, 43B), faisant saille latéralement par rapport auxdites poutres de support de guide (43A, 43B).

13. Centre d'usinage (1) selon une ou plusieurs des revendications précédentes, dans lequel : la première pièce transversale (47A) porte lesdits guides auxiliaires (63) ; la deuxième pièce transversale (47B) est dépourvue de guides auxiliaires ; et la première pièce transversale (47A) est plus longue que la seconde pièce transversale (47B).

14. Centre d'usinage (1) selon une ou plusieurs des revendications précédentes, dans lequel lesdits moyens (51) pour déplacer ladite ou lesdites tables de support de pièce à usiner (53A, 53B) sont agencés à une hauteur comprise dans l'extension verticale desdites poutres de support de guide (43A, 43B).

15. Centre d'usinage (1) selon une ou plusieurs des revendications précédentes, dans lequel lesdites poutres de support de guide (43A, 43B) sont fixées frontalement, à leurs extrémités, à ladite première pièce transversale (47A) et à ladite seconde pièce transversale (47B), et dans lequel de préférence lesdits moyens (51) pour déplacer ladite ou lesdites tables de support de pièce à usiner (53A, 53B) sont supportés par ladite première pièce transversale (47A) et par ladite seconde pièce transversale (47B) et fixés à elles dans une position intermédiaire de l'épaisseur desdites pièces transversales (47A, 47B).

16. Centre d'usinage (1) selon une ou plusieurs des revendications 1 à 14, dans lequel lesdites poutres de support de guide (43A, 43B) sont fixées au-dessus de ladite première pièce transversale (47A) et de ladite seconde pièce transversale (47B) et dans lequel de préférence lesdits moyens (51) pour déplacer ladite ou lesdites tables de support de pièce à usiner sont portés par ladite première pièce transversale (47A) et ladite seconde pièce transversale (47B) et au-dessus d'elles.

17. Centre d'usinage selon une ou plusieurs des revendications précédentes, comprenant des moyens d'enlèvement de copeaux.

18. Centre d'usinage (1) selon l'une quelconque des revendications précédentes, dans lequel ladite structure de support (21) est une structure en portique, de préférence d'un seul tenant.

19. Centre d'usinage (1) selon l'une quelconque des revendications 1 à 17, dans lequel ladite structure de support est une structure verticale déplaçable (5, 9), avec une base (5) sur laquelle au moins un montant (9) portant ladite tête (15) est déplaçable le long d'un axe de translation (X) commandé numériquement.

20. Centre d'usinage (1) selon une ou plusieurs des revendications précédentes, dans lequel entre ledit système de support et de déplacement (3) et ladite structure de support (5, 9 ; 21) il n'y a pas de connexion mécanique directe.
